# EUROPEAN PATENT APPLICATION

(11) **EP 3 846 006 A1**
(43) Date of publication of application: **07.07.2021**
(21) Application number: 19854998.2
(22) Date of filing: 30.08.2019
(51) Int. Cl.: G06F 3/01, H04N 5/225

(54) **WEARABLE DEVICE**

(30) Priority: 30.08.2018 JP 2018162215
(71) Applicant: Asterisk, Inc., Osaka-shi, Osaka 532-0011 (JP)
(72) Inventor: SUZUKI Noriyuki, Osaka-shi Osaka 532-0011 (JP)
(74) Representative: TBK
(86) International application number: PCT/JP2019/034076
(87) International publication number: WO 2020/045616

(57) **Abstract**

Provided is a wearable device allowing a user to switch the device to another state while the user is pointing a finger at an object at a distant position. A wearable camera 2 (wearable device) that a user wears on a finger includes a release switch 8 (switch unit) configured to switch to another state in response to an operation of the user, who is pointing an index finger F2 at an object, with a thumb F1 that is different from the index finger F2. Such switching of the release switch 8 with the thumb F1 allows the user to shoot an image of an object at a distant position.

## Description

### Technical Field

The present invention relates to wearable devices that a user wears on a finger for use.

### Background Art

Various types of devices that are wearable on user's fingers are known. Patent Literature 1, for example, describes a reader of this type that scans (reads) a symbol such as a barcode in response to the user's operation of pointing a finger at the symbol. This reader comes with a trigger switch attached to a fingertip of the user to start the reading process (hereinafter, this switch is called a fingertip switch). This fingertip switch changes the state (switches to on and off) when it comes in contact with an object to be read or it comes close to the object. In response to the state change of the fingertip switch, the CPU of the reader starts the reading process and acquires information from the symbol pointed at.

### Citation List

### Patent Literature

Patent Literature 1: JP 5695806 B

### Summary of Invention

### Technical Problem

Conventionally, a user may perform their tasks while pointing a finger at an object, including confirming the object by pointing at it with a finger or calling the name while pointing at the object with a finger. The fingertip switch described in Patent Literature 1 is configured to change the state when it comes in contact with the object pointed at or gets close to the object. This means that the pointing a finger at an object at a distant position does not activate the fingertip switch, and so the range of the tasks that the user can perform by pointing a finger will be limited.

The present invention aims to provide a wearable device allowing a user to switch the device to another state while the user is pointing a finger at an object at a distant position.

### Solution to Problem

To solve the above problem, a wearable device according to one aspect of the present invention that a user wears on a finger includes a switch unit, and the switch unit is configured to switch to another state in response to an operation of the user, who is pointing a first finger at an object, with a second finger that is different from the first finger.

In one aspect of the present invention, the wearable device includes a functional unit that operates in response to the switching.

In one aspect of the present invention, the switch unit includes a first electrode to be put on any finger of the user, and a second electrode to be put on a finger different from the finger for the first electrode. The switching occurs in response to a user's operation of the first electrode to come in contact with the second electrode.

In one aspect of the present invention, the switch unit includes an actuator to be put on any finger of the user, and an action unit to be put on a finger different from the finger for the actuator, the action unit being activated by the actuator. The switching occurs in response to a user's operation of the actuator to come close to or away from the action unit to activate the action unit.

In one aspect of the present invention, the any finger is a thumb.

In one aspect of the present invention, the switch unit and the functional unit are separate units, and connect to each other via a connector.

### Advantageous Effects of Invention

The wearable device of the present invention includes a switch unit that switches to another state in response to the operation with a user's finger different from the finger pointing at an object, and so enables the switching while the user wearing the device points a finger at an object at a distant position.

### Brief Description of Drawings

FIG. 1 is a plan view illustrating the usage mode of a wearable camera according to one embodiment.
FIG. 2 is a side view illustrating the usage mode of the wearable camera.
FIG. 3A schematically illustrates the hardware configuration of the wearable camera, and FIG. 3B is a functional block diagram of the wearable camera.
FIG. 4A is a perspective view of a wearable camera according to Modified Example 1, and FIG. 4B schematically illustrates the hardware configuration of the wearable camera.
FIG. 5A is a perspective view of a wearable camera according to Modified Example 2, and FIG. 5B schematically illustrates the hardware configuration of the wearable camera.
FIG. 6 is a perspective view of a wearable camera according to Modified Example 3.
FIG. 7A illustrates a wearable camera according to Modified Example 4 during use, and FIG. 7B is a perspective view of the wearable camera.
FIG. 8A illustrates a wearable camera according to Modified Example 5 during use, and FIG. 8B schematically illustrates the hardware configuration of the wearable camera.
FIG. 9 is a perspective view of a wearable camera according to Modified Example 6.

### Description of Embodiments

### [Embodiments]

The following describes some embodiments of the present invention, by way of an example of a wearable camera.

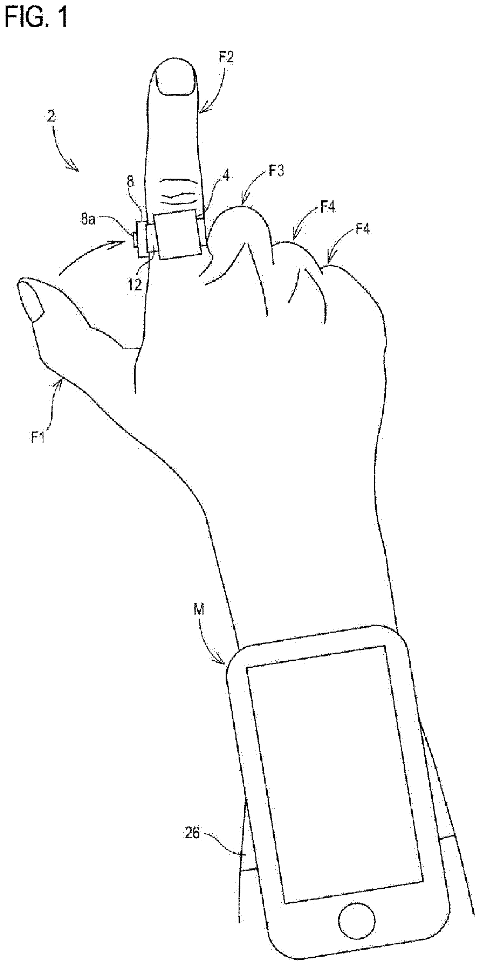

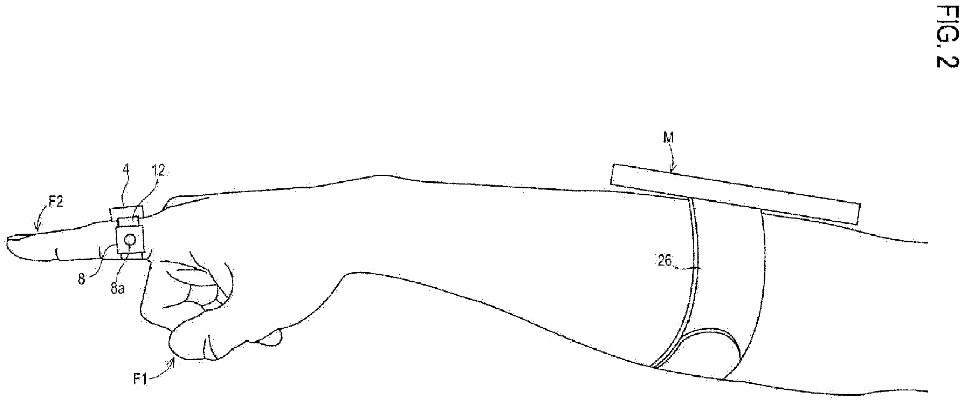

As illustrated in FIGS. 1 and 2, a wearable camera 2 of the present embodiment is a camera of wearable type, and a user wears it on the index finger F2. This wearable camera 2 enables shooting of an object while the user is pointing at the object with one hand, and transmits the shot image to a mobile information terminal M such as a smartphone or a tablet terminal by wireless communication.

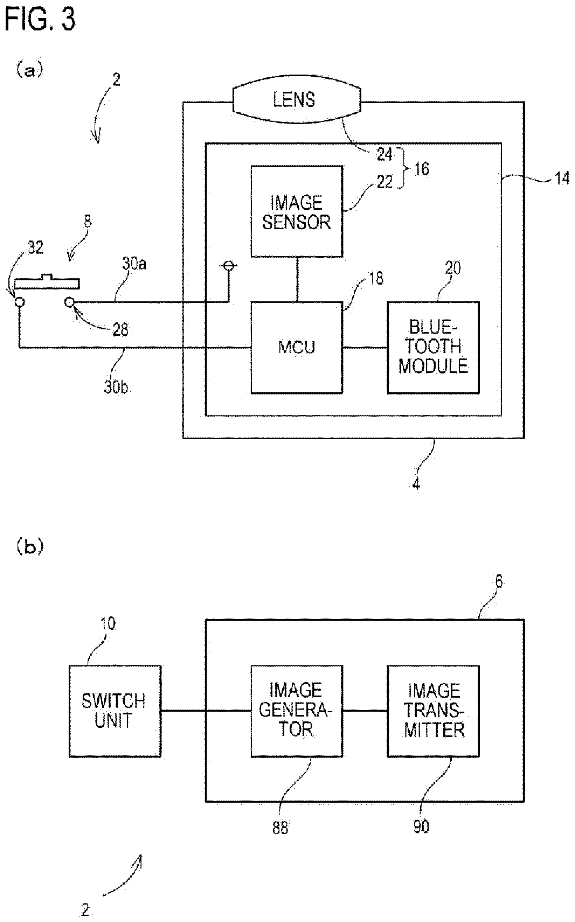

This wearable camera 2 includes: a camera unit 4 (functional unit 6 (FIG. 3)) to transmit the shot image to the mobile information terminal M; and a release switch 8 (switch unit 10 (FIG. 3)). The wearable camera 2 is configured so that the user wears it on the index finger F2 via a ring-shaped attachment 12. The attachment 12 is formed in a size that allows the insertion up to the proximal phalanx of the index finger F2.

The camera unit 4 is fixed to the attachment 12 so as to be placed above the attachment 12 (on the back of the index finger F2) that is inserted up to the proximal phalanx, and the case of the camera unit 4 is formed so as not to obstruct the movement of the user's fingers as much as possible. As illustrated in FIG. 3, the case of the camera unit 4 accommodates a circuit board 14 on which electronic components are mounted, and a not-illustrated battery that supplies electric power to the electronic components. The electronic components include a not-illustrated power supply circuit that receives electric power from the battery and generates power supply, and a camera module 16, a MCU 18, and a Bluetooth (registered trademark) module 20 that are driven by the power supply.

The camera module 16 includes an image sensor 22 and a lens 24, and these image sensor 22 and lens 24 are placed close to the front face of the case so as to be placed on the same optical axis. The image sensor 22 electrically connects to the MCU 18 and is controlled by the MCU 18. Under the control of the MCU 18, a signal output from each of the elements of the image sensor 22 is input to a not-illustrated A/D converter via an amplifier. The signals output from the A/D converter are input to the MCU 18, and the MCU 18 creates an image based on the signals. The MCU 18 then transmits the created image to the mobile information terminal M via the Bluetooth module 20. In this way, the image sensor 22, the lens 24, the A/D converter, and the MCU 18 function as an image generator 88 that creates an image, and the MCU 18 and the Bluetooth module 20 function as an image transmitter 90 that transmits an image.

The mobile information terminal M is a known smartphone or tablet terminal enabling Bluetooth communications and Internet communications, and the user wears this mobile information terminal M on the arm with an attachment 26 such as a band. The mobile information terminal M of the present embodiment has an application installed that analyzes one-dimensional symbols, two-dimensional symbols, and characters included in an image received from the wearable camera 2 to acquire the information from them. In this way, the wearable camera 2 and the mobile information terminal M function as a reader that shoots an image and analyzes symbols and characters in the shot image to acquire information.

In the present embodiment, the MCU 18 of the camera unit 4 electrically connects to the release switch 8. The release switch 8 is of a push button type, and has a keytop 8a exposed so as to let the user push it. To prevent erroneous operation, the keytop 8a of the release switch 8 is preferably exposed flat so as not to protrude. One of the terminals 28 of the release switch 8 electrically connects to the power supply of the circuit board 14 via a cable 30a, and the other terminal 32 of the release switch 8 electrically connects to the input of the MCU 18 via a cable 30b. Pushing this release switch 8 with the thumb F1 inputs an ON signal (power-supply level signal) to the MCU 18. Detecting the ON signal, the MCU 18 controls the camera module 16 to start shooting.

The release switch 8 is fixed to the attachment 12 so as to be placed lateral of the attachment 12 that is inserted up to the proximal phalanx, specifically placed at a position that allows the user to operate it with the thumb F1 (lateral of the index finger F2 to face the thumb F1). The release switch 8 is preferably formed to be thin so as not to hinder the movement of the fingers and has a width and a length similar to those of the proximal phalanx.

The wearable camera 2 of the present embodiment allows the user to wear it on the proximal phalanx of the index finger F2 and operate the release switch 8 with the thumb F1. The user therefore operates the release switch 8 with the thumb F1 while pointing the index finger F2 at the object. This wearable camera therefore allows a user to shoot an image of an object at a distant position while pointing the index finger at the object and by operating the release switch with the thumb F1.

That is a description of one embodiment of the present invention by way of an example of the wearable camera 2. The present invention may be embodied as follows.

### <Modified Example 1>

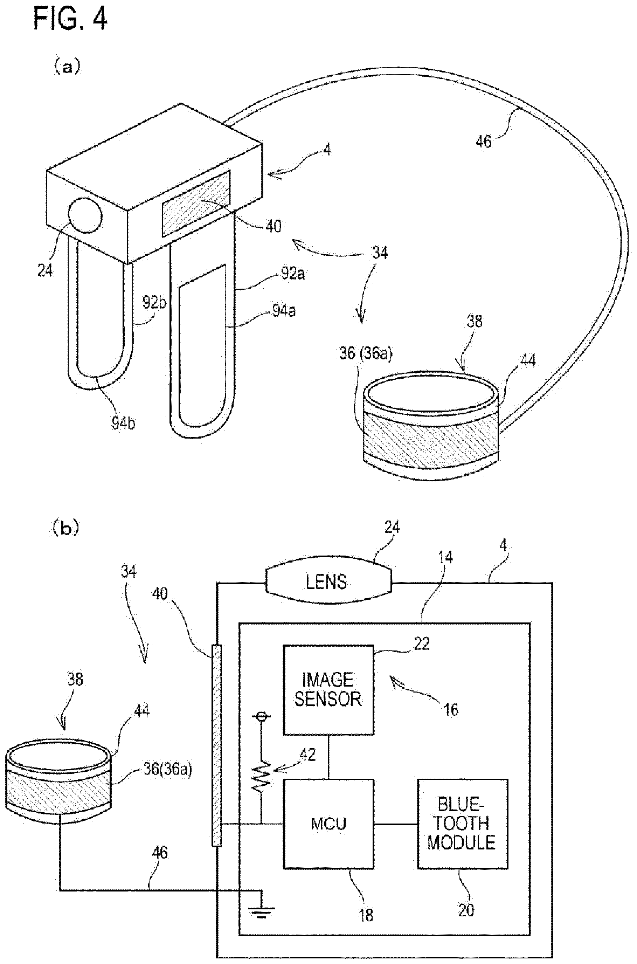

The release switch 8 in the above embodiment is of a push button type. In another example, as illustrated in FIG. 4, this may be a switch unit 34 that switches to another state (changes the state) when the thumb F1 comes in contact with the camera unit 4. Such a switch unit 34 includes a ring 38 having a conductive layer 36 (first electrode) on the surface and configured so that the user wears it on the thumb F1, an electrode 40 (second electrode) exposed on a side face of the camera unit 4, and a MCU 18 that detects a contact between the electrode 40 and the ring 38.

Specifically, the electrode 40 is exposed on a side face of the case of the camera unit 4 to face the thumb F1. The electrode 40 electrically connects to the input of the MCU 18 via a pull-up resister 42. The ring 38 that the user wears on the thumb F1 includes a base ring 44 made of an insulator, and conductive rubber 36a bonded to the surface of the base ring 44. Core wire of a cable 46 is inserted in a part between the base ring 44 and the conductive rubber 36a. The distal end of the cable 46 is connected to the ground of a circuit board 14 in the camera unit 4. This makes the surface of the ring 38 electrically continuous to the ground of the circuit board 14. With this embodiment, when the user moves the thumb F1 to bring the ring 38 into contact with the camera unit 4, the surface of the ring 38 and the electrode 40 become electrically continuous to each other, and a ground level signal is input to the MCU 18. The MCU 18 monitors the input status and detects a change of the status from the power supply level to the ground level as switching. Detecting such switching, the MCU 18 starts shooting control of the camera module 16. As illustrated in FIG. 4, the user wears the camera unit 4 on the index finger with a pair of strip-shaped bands 92a and 92b. This pair of bands 92a and 92b comes with a pair of hook-and-loop fasteners 94a and 94b so that they can be attached to and detached from each other.

### <Modified Example 2>

The above Modified Example 1 is configured so that user's operation of the ring 38 on the thumb F1 to come in contact with the electrode 40 of the camera unit 4 causes the switching. In another example, user's operation to bring the thumb F1 close to the camera unit 4 may cause the switching.

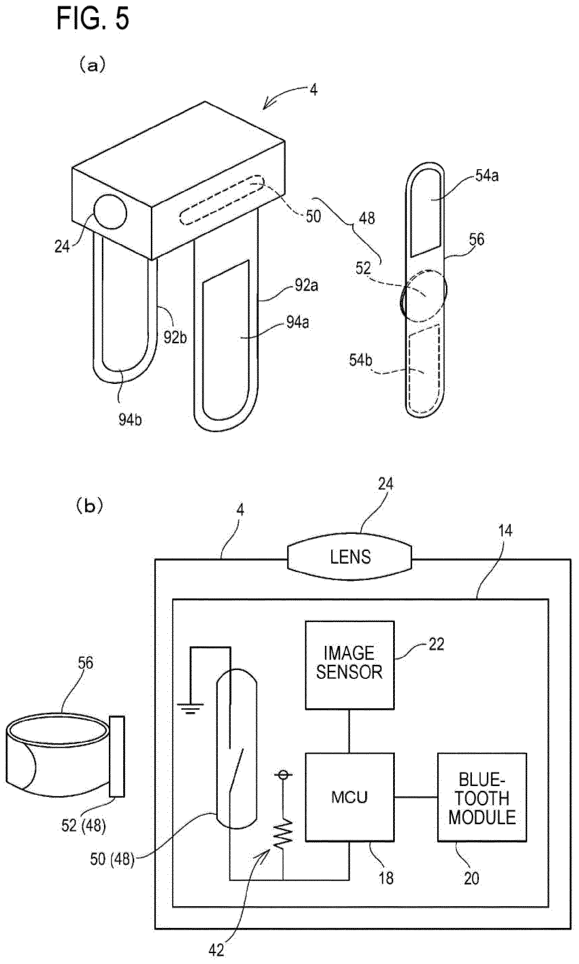

Specifically, as illustrated in FIG. 5, the switch unit 48 includes a reed switch 50 inside the camera unit 4, a magnet 52 that the user wears on the thumb F1, and the MCU 18 that detects the switching of the reed switch 50. The reed switch 50 is placed inside of the camera unit 4 to be close to the thumb F1, and has one terminal connecting to the ground of the circuit board 14 and the other terminal connecting to the input of the MCU 18 via a pull-up resister 42. The magnet 52 that the user wears on the thumb F1 is attached to the center of a strip 56 having hook-and-loop fasteners 54a and 54b at both ends. The user wears this strip 56 on the thumb F1 so that the magnet 52 is placed on the pad of the thumb F1. With this embodiment, when the user moves the thumb F1 to bring the magnet 52 close to the camera unit 4, the reed switch 50 activates (the contacts come in contact) so that the terminals of the reed switch 50 become electrically continuous to each other. As a result, a ground level signal is input to the MCU 18. The MCU 18 monitors the input status and detects a change of the status from the power supply level to the ground level as switching. In this way, the magnet 52 functions as an actuator to activate the reed switch 50, and the reed switch 50 functions as an action unit activated by the magnet 52.

### <Modified Example 3>

The above embodiment and modified examples are configured so that user's operation of the thumb F1 toward the index finger F2 causes the switching of the switch unit 10, 34, 48. In another example, user's operation of the thumb F1 toward another finger different from the index finger F2 (another finger having no camera unit 4 put thereon) may cause the switching.

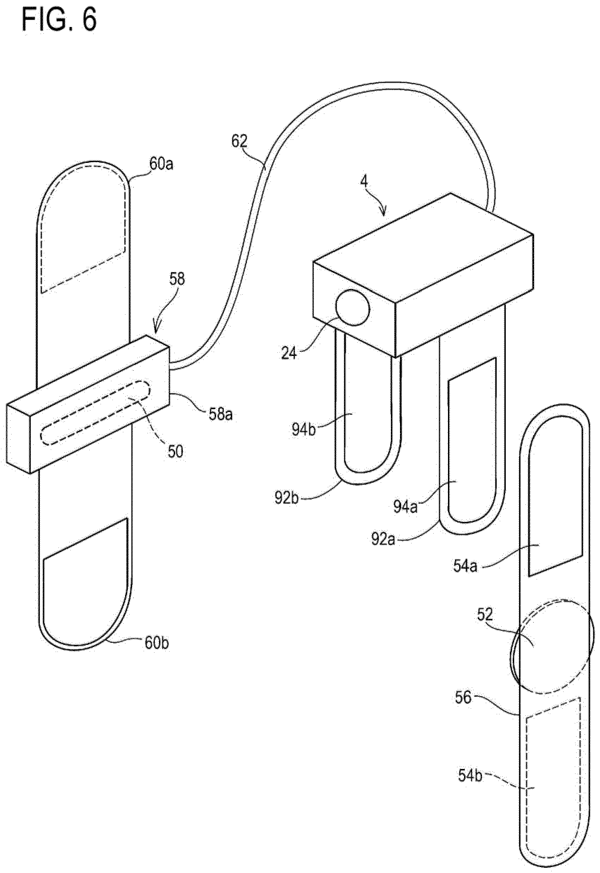

Unlike Modified Example 2 including the reed switch 50 inside the camera unit 4, another example as illustrated in FIG. 6 may include an independent reed switch unit 58 having a case 58a accommodating the reed switch 50 only, and the user may wear this reed switch unit 58 on the proximal phalanx of the middle finger F3 via a pair of bands 60a and 60b. As in Modified Example 2, the terminals of this reed switch 50 connect to the ground of the circuit board 14 and the input of the MCU 18 in the camera unit 4 via a cable 62. With this embodiment, when the user moves the thumb F1 to bring the magnet 52 close to the reed switch unit 58, the reed switch 50 activates (the contacts come in contact) so that the terminals of the reed switch 50 become electrically continuous to each other. In this way, the magnet 52 put on the thumb F1 functions as an actuator to activate the reed switch 50 placed on the middle finger F3, and the reed switch 50 placed on the middle finger F3 functions as an action unit activated by the magnet 52.

### <Modified Example 4>

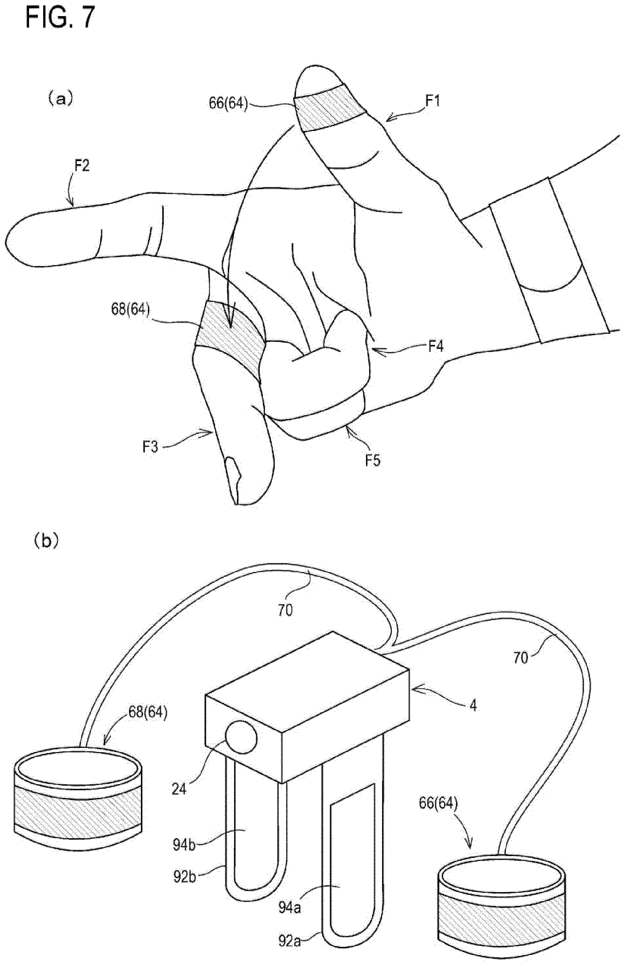

As illustrated in FIG. 7, a switch unit 64 may include a first ring 66 put on a fingertip part of the thumb F1 and a second ring 68 put on the proximal phalanx of the middle finger F3. These rings 66 and 68 are configured similarly to the ring 38 of Modified Example 1, and conductive rubber of each of the rings 66 and 68 electrically connects to the circuit board 14 via a cable 70. In one example, the conductive rubber of the first ring 66 connects to the input of the MCU 18 via a pull-up resister, and the conductive rubber of the second ring connects to the ground of the circuit board 14. With this embodiment, user's movement of the thumb F1 establishes electrical continuity between the conductive rubber on the surfaces of the first ring 66 and the second ring 68. As a result, a ground level signal is input to the MCU 18. The MCU 18 monitors the input status and detects a change of the status from the power supply level to the ground level as switching. In this way, the conductive rubber of the first ring 66 functions as the first electrode that gives a ground level signal to the conductive rubber of the second ring 68, and the conductive rubber of the second ring 68 functions as the second electrode. The finger to put the second ring 68 thereon may be the ring finger F4 or the little finger F5.

### <Modified Example 5>

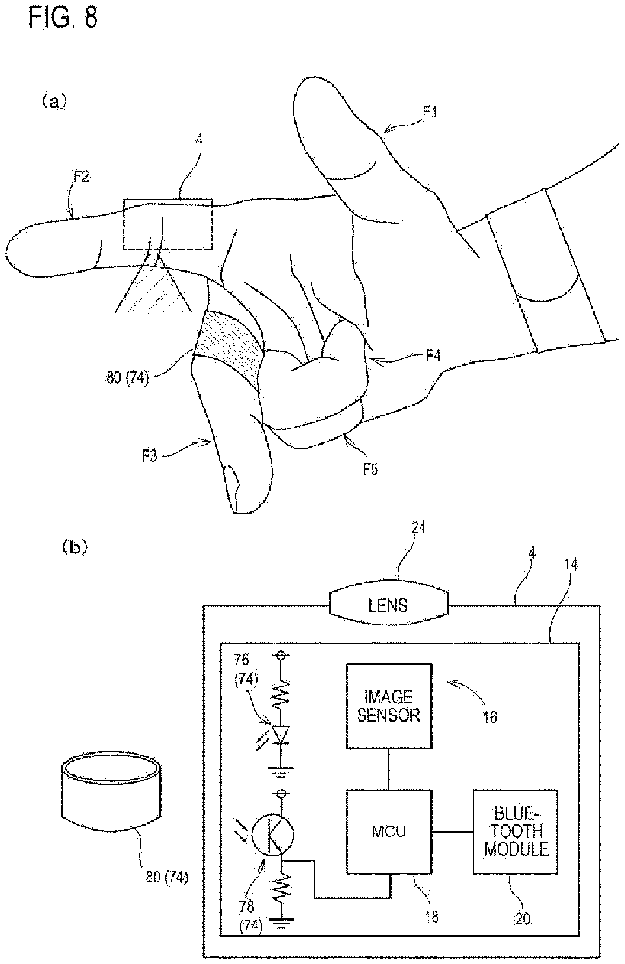

The above-described embodiment and modified examples 1 to 4 are configured to bring mainly the thumb F1 in contact with or close to the switch unit put on the index finger F2 or the middle finger F3 for switching. In another example, as illustrated in FIG. 8, a switch unit 74 may include a middle-finger switch unit put on the middle finger F3, and an index-finger switch unit put on the index finger F2. In one example, the index-finger switch unit includes a light source 76 and a phototransistor 78 assembled in the case of the camera unit 4, and the middle-finger switch unit is a ring 80 whose surface is covered with a reflective sheet.

The light source 76 is typically a LED that irradiates infrared rays at a wide angle. The phototransistor 78 receives infrared rays reflected by the ring 80 (reflective sheet), and has the output terminal electrically connecting to the input of the MCU 18. Such light source 76 and phototransistor 78 are assembled in the case so that the irradiation surface and the light receiving surface are exposed on the side face of the case facing the middle finger. With this embodiment, when the user bends the middle finger F3 while pointing at an object with the index finger F2, the ring 80 (reflective sheet) is away from the light source 76 and the phototransistor 78, so that the phototransistor 78 does not receive the infrared rays, which would otherwise are reflected by the ring 80 to be incident on the light receiving surface, so that the output level of the phototransistor 78 changes. The MCU 18 detects the change of the output level as switching. When the switching is detected, the MCU 18 starts shooting control of the camera module 16.

In another example of the index-finger switch unit and the middle-finger switch unit, a rotary switch may be used, which rotates with the bending motion of the middle finger F3 relative to the index finger F2 and has the output terminal electrically connecting to the input of the MCU 18. The MCU 18 detects switching based on a signal change from the rotary switch to control the camera module 16.

### <Modified Example 6>

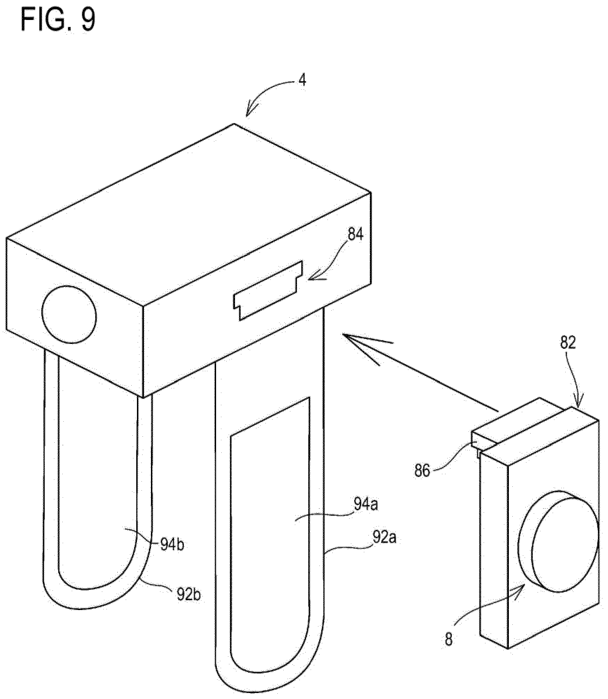

The above embodiment and modified examples are configured so that the output of the switch unit is input to the MCU 18 of the camera unit 4 via a cable or the like. As illustrated in FIG. 9, another example may be configured so that a switch unit 82 and a camera unit 4 are connected with a connector.

In one example, the case of the camera unit 4 has a female connector 84 on the side face facing the thumb. The switch unit 82 comes with a male connector 86 on the inside, and the male connector 86 is detachable from the female connector 84. The female connector 84 has at least two terminals. One of the terminals electrically connects to the input of the MCU 18 in the camera unit 4, and the other terminal electrically connects to the power supply of the circuit board 14. The male connector 86 has connectors as the counterparts. The terminals of the male connector 86 electrically connect to the terminals of the release switch 8. With this configuration, when the user pushes the release switch 8 of the switch unit 82 connecting to the camera unit 4 with the connectors, a power-supply level signal is input to the input of the MCU 18 via the connectors 84 and 86, and the MCU 18 detects the switching.

The camera unit 4 may include the female connectors 84 on opposed faces of the case (to face the thumb and the middle finger). Such connectors on the opposed faces of the case enables selection of the position where the user wears the switch unit 82, whereby the user may wear the wearable camera either on the right hand or on the left hand for use.

Embodiments of the present invention can be variously improved, altered, or modified based on the knowledge of those skilled in the art without departing from the spirit of the present invention. Any matters specifying the invention may be replaced with other techniques in an embodiment as long as the same action or effects are obtained from the embodiment.

The above embodiment and modified examples describe the wearable camera as an example of the wearable device. In another example, the wearable device may be a pointing device that irradiates a red laser beam in response to the switching of the switch unit.

### Reference Signs List

- 2: Wearable camera (wearable device)
- 6: Functional unit
- 10: Switch unit
- 50: Reed switch
- 52: Magnet
- 66: First ring
- 68: Second ring
- 84: Female connector
- 86: Male connector
- F1: Thumb
- F2: Finger
- F3: Middle finger

## Claims

1. A wearable device that a user wears on a finger, comprising a switch unit configured to switch to another state in response to an operation of the user, who is pointing a first finger at an object, with a second finger that is different from the first finger.

2. The wearable device according to claim 1, further comprising a functional unit that operates in response to the switching.

3. The wearable device according to claim 1 or 2, wherein the switch unit includes a first electrode to be put on any finger of the user, and a second electrode to be put on a finger different from the finger for the first electrode, wherein the switching occurs in response to a user's operation of the first electrode to come in contact with the second electrode.

4. The wearable device according to claim 1 or 2, wherein the switch unit includes an actuator to be put on any finger of the user, and an action unit to be put on a finger different from the finger for the actuator, the action unit being activated by the actuator, wherein the switching occurs in response to a user's operation of the actuator to come close to or away from the action unit to activate the action unit.

5. The wearable device according to claim 3 or 4, wherein the any finger is a thumb.

6. The wearable device according to any one of claims 2 to 5, wherein the switch unit and the functional unit are separate units, and connect to each other via a connector.
